# EUROPÄISCHE PATENTSCHRIFT

(11) **EP 0 537 449 B1**
(45) Veröffentlichungstag und Bekanntmachung des Hinweises auf die Patenterteilung: **25.10.1995**
(21) Anmeldenummer: 92114458.0
(22) Anmeldetag: 25.08.1992
(51) Int. Cl.: B23Q 16/00, B29C 45/26

(54) **Führungselement für Formnormalien**
Guiding element for mould standards
Elément de guidage pour normes de moule

(30) Priorität: 18.10.1991 DE 9112959 U
(43) Veröffentlichungstag der Anmeldung: 21.04.1993
(73) Patentinhaber: Strack Norma GmbH. & Co. KG, D-58511 Lüdenscheid (DE)
(72) Erfinder: Schmidt, Klaus, W-5885 Schlaksmühle (DE)
(74) Vertreter: Dörner, Lothar, Dipl.-Ing.

(56) Entgegenhaltungen:
- EP-A- 0 338 460
- DE-A- 3 534 937
- DE-A- 3 630 001
- PATENT ABSTRACTS OF JAPAN vol. 13, no. 23 (E-705)(3371) 19. Januar 1989 & JP-A-63 226 935 (MITSUBISHI ELECTRIC CORP)

## Beschreibung

Die Erfindung betrifft eine Formnormalie mit einem zylindrischen Führungselement, das eine Ringnut aufweist, in der ein Klemmelement vorgesehen ist, dessen veränderlicher Außendurchmesser größer als der Außendurchmesser des Führungselements ist.

Formnormalien sind Werkzeuge, mit deren Hilfe Kunststoffteile im Spritzgußverfahren hergestellt werden. Führungselemente dienen im Formenbau dazu, Formteile exakt zu führen, so daß sie nach jedem Öffnen der Form in die genau vorgegebene Position zurückkehren. Diese Führungselemente mit definiertem Passungssitz herzustellen, ist ein Problem. Die zulässigen Toleranzen erlauben unterschiedliche Passungssitze, angefangen von einer Spielpassung bis zu einer Presspassung. Bei den auftretenden Toleranzen kann das Passungsspiel ausreichen, um Führungselemente selbsttätig aus der Form herausfallen zu lassen. Hierbei besteht Unfallgefahr, wenn ein solches Führungselement einem Werker auf die Füße fällt. Andererseits kann auf Grund der auftretenden Toleranzen ein Führungselement so fest in eine Passung gepreßt sein, daß das Auswechseln des Führungselements mit hohem Aufwand verbunden ist. Um einerseits das einwandfreie Führen des Führungselements zu gewährleisten, andererseits sein Herausfallen aus der Form zu verhindern, werden die Führungselemente spitzenförmig geschliffen. Dies ist jedoch mit erheblichem Aufwand verbunden.

Eine Formnormalie der eingangs genannten Art ist aus Patent Abstracts of Japan & JP-A-63-226935 bekannt. Bei der bekannten Formnormalie besteht das Klemmelement aus einem in die Ringnut eingebrachten, elastisch verformbaren hohlen Ring, der mit Öl gefüllt ist. Abhängig von dem Öldruck ist der Außendurchmesser des Klemmelements veränderlich; er kann größer als der Außendurchmesser des Führungselements sein. Über die Wahl des Außendurchmessers läßt sich ein definierter Schiebesitz herstellen. Bei der bekannten Formnormalie erfolgt die Verbindung des Führungselements mit dem es haltenden Formteil über den als nachteilig beschriebenen Preßsitz. Das Klemmelement dient der Verbindung zwischen dem Führungselement und einer Bohrung in dem anderen Formteil.

Der Erfindung liegt die Aufgabe zugrunde, eine Formnormalie mit einem zylindrischen Führungselement zu schaffen, das nicht nur einen definierten Schiebesitz aufweist, sondern auch die erforderliche Selbsthemmung gewährleistet. Diese Aufgabe wird bei einer Formnormalie der eingangs genannten Art gemäß der Erfindung dadurch gelöst daß das Klemmelement ein elastischer Ring ist, der zur Herstellung eines definierten Schiebesitzes mit Selbsthemmung zwischen der Formnormalie und dem Führungselement in die Ringnut eingesetzt ist.

In Ausgestaltung der Erfindung ist als Klemmelement ein O-Ring aus Gummi oder Kunststoff, ein Federring aus Metall oder ein Schraubenfederring vorgesehen.

Das Führungselement nach der Erfindung ermöglicht es, einen genau definierten Schiebesitz mit Selbsthemmung herzustellen, ohne die Toleranzen weiter einzuengen. Darüberhinaus ermöglicht es diese Ausführung, erhebliche Kosten einzusparen, da auf das herkömmliche Schleifen zwischen den Spitzen verzichtet werden kann. Dabei sind unter Führungselementen beispielsweise Zentrierhülsen, Führungsbuchsen oder Führungsbolzen zu verstehen.

Die Ausgestaltung der Ringnut wird zweckmäßig an das Klemmelement angepaßt. Sie kann zum Beispiel halbkreisoder halbellipsenförmigen Querschnitt aufweisen. In Ausgestaltung der Erfindung wird bevorzugt, der Ringnut rechteckigen Querschnitt mit abgerundeten Übergängen von den Nutwänden zum Nutgrund und zur äußeren Oberfläche zu geben.

Ausführungsbeispiele der Erfindung sind in der Zeichnung dargestellt und werden im folgenden näher beschrieben. Es zeigen:
- Fig. 1: eine Zentrierhülse teilweise in Seitenansicht, teilweise im Axialschnitt;
- Fig. 2: eine Führungsbuchse im Axialschnitt;
- Fig. 3: einen Führungsbolzen in Seitenansicht.

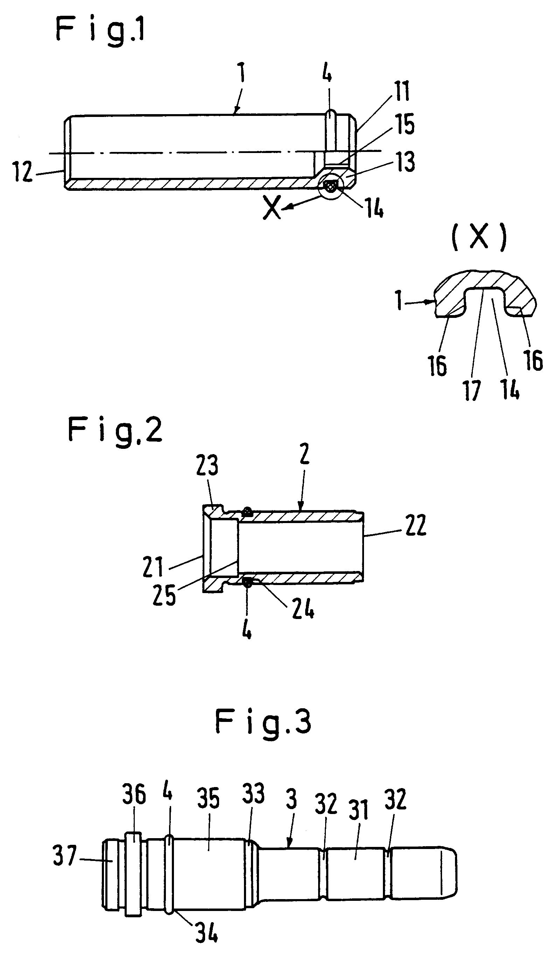

Die in Fig. 1 dargestellte Zentrierhülse 1 ist im wesentlichen hohlzylindrisch ausgeführt. Im Bereich ihrer Stirnseiten 11 und 12 ist sie sowohl innen wie außen angefast. Im Bereich der Stirnseite 11 weist die Zentrierhülse 1 eine ringförmige Innenwulst 13 mit Innengewinde 15 und außen eine Ringnut 14 auf. Die Ringnut 14 dient der Aufnahme eines Klemmelements, im Ausführungsbeispiel eines O-Rings 4. Der Innendurchmesser des O-Rings 4 ist gleich dem Durchmesser des Nutgrundes; der Außendurchmesser des O-Rings 4 ist etwas größer als der Außendurchmesser der Zentrierhülse 1.

Die Ringnut 14 weist rechteckigen Querschnitt auf. Sie besteht aus zwei Nutwänden 16 und dem Nutgrund 17. Die Übergänge von den Nutwänden 16 zum Nutgrund 17 und zur äußeren Oberfläche der Zentrierhülse 1 sind abgerundet.

Auch die in Fig. 2 dargestellte Führungsbuchse 2 ist im wesentlichen hohlzylindrisch ausgebildet. Im Bereich Ihrer Stirnseite 22 ist die Führungsbuchse 2 innen angefast; außen weist sie einen abgesetzten verkleinerten Durchmesser auf. Im Bereich der Stirnseite 21 weist die Führungsbuchse außen einen Flansch 23 geringen Durchmessers auf. Der Innendurchmesser der Führungsbuchse 2 ist im Anschluß an die Stirnseite 21 größer als im Anschluß an die Stirnseite 22. Die beiden Innenteile der Führungsbuchse 2 sind durch eine Schulter 25 gegeneinander abgesetzt. Außen ist in die Führungsbuchse 2 eine Ringnut 24 eingebracht, die das Klemmelement, im Ausführungsbeispiel wiederum den O-Ring 4, aufnimmt. Die Ringnut 24 ist wie die Ringnut 14 ausgebildet.

Der in Fig. 3 dargestellte Führungsbolzen 3 weist ein Führungsteil 31 auf, das durch in Axialrichtung versetzte Nuten 32 unterteilt ist. An das Führungsteil 31 schließt über einen Absatz 33 ein Passteil 35 an. In das Passteil 35 ist eine Ringnut 34 eingelassen. Die Ringnut 34 ist wie die Ringnut 14 ausgebildet. Die Ringnut 34 nimmt wiederum das Klemmelement, im Ausführungsbeispiel den O-Ring 4, auf. Auf der dem Führungsteil 31 abgewandten Seite schließt an das Passteil 32 ein Bund 36 an. Auf der dem Passteil 32 abgewandten Seite des Bundes 36 ist der Führungsbolzen 3 mit einem Kopf 37 versehen.

Der als Ausführungsbeispiel verwendete O-Ring 4 kann aus Gummi oder Kunststoff bestehen. An seiner Stelle kann als Klemmelement auch ein Federring aus Metall oder ein Schraubenfederring verwendet werden.

## Patentansprüche

1. Formnormalie mit einem zylindrischen Führungselement (1; 2; 3), das eine Ringnut (14; 24; 34) aufweist, in der ein Klemmelement vorgesehen ist, dessen veränderlicher Außendurchmesser größer als der Außendurchmesser des Führungselements ist, dadurch gekennzeichnet, daß das Klemmelement ein elastischer Ring (4) ist, der zur Herstellung eines definierten Schiebesitzes mit Selbsthemmung zwischen der Formnormalie und dem Führungselement in die Ringnut (14; 24; 34) eingesetzt ist.

2. Formnormalie nach Anspruch 1, dadurch gekennzeichnet, daß als Klemmelement ein O-Ring (4) aus Gummi oder Kunststoff vorgesehen ist.

3. Formnormalie nach Anspruch 1, dadurch gekennzeichnet, daß als Klemmelement ein Federrring aus Metall vorgesehen ist.

4. Formnormalie nach Anspruch 1, dadurch gekennzeichent, daß als Klemmelement ein Schraubenfederring vorgesehen ist.

5. Formnormalie nach einem der Ansprüche 1 bis 4, dadurch gekennzeichnet, daß die Ringnut (14; 24; 34) rechteckigen Querschnitt mit abgerundeten Übergängen von den Nutwänden (16) zum Nutgrund (17) und zur äußeren Oberfläche aufweist.

## Claims

1. Standard mould part with a cylindrical guide element (1; 2; 3), which has an annular groove (14; 24; 34) in which is provided a clamping element, the variable outside diameter of which is greater than the outside diameter of the guide element, characterized in that the clamping element is an elastic ring (4) which, to produce a defined sliding fit, is inserted into the annular groove (14; 24; 34) with self-locking between the standard mould part and the guide element.

2. Standard mould part according to claim 1, characterized in that an O-ring (4) made of rubber or plastic material is provided as a clamping element.

3. Standard mould part according to claim 1, characterized in that a spring washer made of metal is provided as a clamping element.

4. Standard mould part according to claim 1, characterized in that a helical spring washer is provided as a clamping element.

5. Standard mould part according to one of claims 1 to 4, characterized in that the annular groove (14; 24; 34) is rectangular in cross-section with rounded-off transitions from the groove walls (16) to the groove base (17) and to the outer surface.

## Revendications

1. Norme de moule avec un élément de guidage (1; 2; 3) cylindrique qui présente une rainure annulaire (14; 24; 34) dans laquelle est prévu un élément de blocage dont le diamètre extérieur variable est supérieur au diamètre extérieur de l'élément de guidage, caractérisée en ce que l'élément de blocage est une bague (4) élastique qui est insérée dans la rainure annulaire (14; 24; 34) pour obtenir un ajustement appuyé défini, avec autoblocage, entre la norme de moule et l'élément de guidage.

2. Norme de moule selon la revendication 1, caractérisée en ce qu'il est prévu comme élément de blocage un joint torique (4) en caoutchouc ou en plastique.

3. Norme de moule selon la revendication 1, caractérisée en ce qu'il est prévu comme élément de blocage une bague élastique en métal.

4. Norme de moule selon la revendication 1, caractérisée en ce qu'il est prévu comme élément de blocage une bague à ressort hélicoïdal.

5. Norme de moule selon l'une quelconque des revendications 1 à 4, caractérisée en ce que la rainure annulaire (14; 24; 34;) présente une section rectangulaire avec des transitions arrondies entre les parois de rainure (16), le fond de rainure (17) et la surface externe.
